# EUROPEAN PATENT APPLICATION

(11) **EP 3 321 410 A1**
(43) Date of publication of application: **16.05.2018**
(21) Application number: 17165990.7
(22) Date of filing: 11.04.2017
(51) Int. Cl.: D06F 39/00, D06F 39/12, F16B 5/02

(54) **WALL-MOUNTED WASHING MACHINE AND INSTALLATION METHOD THEREOF**

(30) Priority: 15.11.2016 KR 20160151991
(71) Applicant: Dongbu Daewoo Electronics Corporation, Seoul 06194 (KR)
(72) Inventor: LEE, Jong Jin, 06194 Seoul (KR)
(74) Representative: Rau, Schneck & Hübner Patentanwälte Rechtsanwälte PartGmbB

(57) **Abstract**

A wall-mounted washing machine includes a rear panel (100) mounted on a porous wall (10) having a plurality of cavities, a tub (200) connected to the rear panel (100) and configured to store washing water, a drum (300) rotatably installed in the tub (200) and configured to wash washing objects, and a fastener unit (400) having one end portion fixed to a fastening hole extending through the cavities of the porous wall (10) and the other end portion configured to extend through the rear panel (100) to fix the rear panel (100). A first thread is formed in one end portion of the fastener unit (400). A second thread having a smaller pitch than the first thread is formed in the other end portion of the fastener unit (400).

## Description

### TECHNICAL FIELD

The present disclosure relates to a wall-mounted washing machine and an installation method thereof.

### BACKGROUND

In general, a wall-mounted washing machine is manufactured for installation on a wall in a room having a narrow space, for instance.

The wall-mounted washing machine includes a cabinet, a tub disposed within the cabinet and configured to store washing water, a drum rotatably installed in the tub and configured to accommodate an item to be washed, a drive device configured to supply power to the drum, a water supply device configured to supply washing water into the tub, and a drain device configured to drain the washing water from the tub to the outside of the cabinet.

For example, if a washing cycle is started after a user puts an item into the drum, the washing water is supplied into the tub (and the drum) by the water supply device. The drum is rotated by the drive device to perform the washing cycle. At the end of washing, the washing water contained in the tub and in the drum is drained to the outside of the cabinet by the drain device.

A wall-mounted washing machine is typically small in size and can be installed on a wall. Thus, the wall-mounted washing machine can be installed on a wall of a bathroom where space is limited.

However, when the wall of a bathroom is formed of a porous wall material having a plurality of cavities therein, if the wall-mounted washing machine is fixed to the porous wall by ordinary bolts, the porous wall may not be able to support the weight of the washing machine or may not be able to provide the requisite pulling force for supporting the washing machine.

In particular, due to the vibration of the wall-mounted washing machine generated in the course of dewatering and rinsing laundry, the washing machine may be loosened from the porous wall or may become detached from the porous wall in a worst case situation.

### SUMMARY

Therefore, embodiments of the present disclosure provide a wall-mounted washing machine capable of being firmly installed on a porous wall that has a plurality of cavities, and embodiments also include an installation method thereof.

Embodiments of the present disclosure provide a wall-mounted washing machine capable of being firmly installed on a porous wall by a fastener unit having a plurality of threads of different pitches and capable of being reattached with ease, and also provide an installation method thereof.

In accordance with a first embodiment of the present invention, there is provided a wall-mounted washing machine, including: a rear panel operable to be mounted on a porous wall having a plurality of cavities; a tub connected to the rear panel and configured to store washing water; a drum rotatably installed in the tub and configured to wash washing items; and a fastener unit having one end portion fixed to a fastening hole extending through the plurality of cavities of the porous wall and the other end portion configured to extend through the rear panel to fix the rear panel, wherein a first thread is formed in one end portion of the fastener unit, and a second thread having a smaller pitch than the first thread is formed in the other end portion of the fastener unit.

The fastener unit may include an anchor part fitted to the fastening hole and configured to be expanded and fixed to the porous wall around the fastening hole as the first thread is inserted into the anchor part.

The fastener unit may also include a vibration-absorbing member fitted to the second thread and pressed against the rear panel and operable to absorb vibration of the rear panel.

The fastener unit may also include a plurality of fastening nuts fastened to the second thread to press the vibration-absorbing member and the rear panel against the porous wall.

The fastener unit may also include a plain washer disposed between the vibration-absorbing member and the fastening nuts to prevent loosening of the fastening nuts, and a spring washer disposed between the plain washer and the fastening nuts to elastically push the vibration-absorbing member and the rear panel toward the porous wall.

A polygonal head portion may be formed at a tip of the other end portion of the fastener unit so that a wrench may be used with the head portion to apply an increased torque to the fastener unit.

The rear panel and a sidewall of the tub may be integrally formed together, with the rear panel having a diameter larger than a diameter of a circumferential surface of a sidewall of the tub.

The rear panel and the tub may be integrally formed together using an insert injection molding process.

The tub may have a sidewall formed in a cylindrical shape so that a diameter of the sidewall gradually increases toward a front side.

The rear panel may include one or more reinforcing ribs formed on a rear surface of the rear panel to enhance the strength of the rear panel.

A shock absorbing member operable to absorb noise and vibration from the drum type washing machine may be installed between the rear panel and the porous wall.

The washing machine may further include a reinforcing unit configured to connect the rear panel and a sidewall of the tub.

The reinforcing unit may protrude from a front surface of the rear panel toward a front side of the sidewall of the tub to distribute loads applied to a connection portion between the rear panel and the tub.

In accordance with a second embodiment of the present invention, there is provided an installation method of a wall-mounted washing machine, including: a step of forming a fastening hole in a porous wall having a plurality of cavities; a step of inserting an expandable anchor part into the fastening hole; a step of inserting a first thread of a fastener unit into the anchor part to expand the anchor part to fix the fastener unit to the fastening hole; and a step of fixing a rear panel of the drum type washing machine to a second thread of the fastener unit.

The step of fixing the rear panel may include a step of fitting the rear panel to the second thread; a step of sequentially fitting a vibration-absorbing member, a plain washer and a spring washer to the second thread; and a step of fastening a plurality of fastening nuts to a portion of the second thread on an outer side of the spring washer in order to press the vibration-absorbing member and the rear panel against the porous wall.

The embodiments of the present disclosure are advantageous in that the wall-mounted washing machine can be firmly installed on the porous wall having a plurality of cavities.

Furthermore, according to the embodiments of the present disclosure, it is possible to suppress generation of vibration noise by restraining the vibration generated in the wall-mounted washing machine from being transmitted to the porous wall. It is also possible to prevent the wall-mounted washing machine from being accidentally detached from the porous wall.

In addition, according to embodiments of the present disclosure, it is possible to firmly install the drum type washing machine on the porous wall by a fastener unit provided with a plurality of threads having different pitches and to reattach the drum type washing machine with ease.

### BRIEF DESCRIPTION OF THE DRAWINGS

Fig. 1 is a perspective view showing a wall-mounted washing machine according to one embodiment of the present disclosure.
Fig. 2 is a cross sectional view showing a state in which the wall-mounted washing machine according to one embodiment of the present disclosure is installed on a porous wall.
Fig. 3 is an enlarged cross sectional view showing a fastening region located between the wall-mounted washing machine according to one embodiment of the present disclosure and the porous wall.
Fig. 4 is an exploded perspective view showing a fastener unit for fastening the wall-mounted washing machine installed on the porous wall in accordance with one embodiment of the present disclosure.
Fig. 5 is a side view showing the fastener unit for fastening the wall-mounted washing machine according to one embodiment of the present disclosure.
Fig. 6 is a rear view showing the rear surface of the wall-mounted washing machine according to one embodiment of the present disclosure.
Fig. 7 is a cross sectional view showing a reinforcing unit of the wall-mounted washing machine according to one embodiment of the present disclosure.
Figs. 8, 9, 10 and 11 are reference views for illustrating an installation method of a wall-mounted washing machine according to another embodiment of the present disclosure.
Fig. 12 is a flowchart showing an exemplary installation method of the wall-mounted washing machine according to another embodiment of the present disclosure.

### DETAILED DESCRIPTION

Hereinafter, configurations and operations of embodiments will be described in detail with reference to the accompanying drawings. The following description is one of various patentable aspects of the disclosure and may form a part of the detailed description of the disclosure. However, in describing the disclosure, detailed descriptions of known configurations or functions are omitted so as not to obscure the embodiments of the present disclosure.

The disclosure may be variously modified and may include various embodiments. Specific embodiments will be exemplarily illustrated in the drawings and described in the detailed description of the embodiments. However, it should be understood that they are not intended to limit the disclosure to specific embodiments but rather to cover all modifications, similarities, and alternatives which are included in the spirit and scope of the disclosure.

The terms used herein, including ordinal numbers such as "first" and "second" may be used to describe, and not to limit, various components. The terms simply distinguish the components from one another. When it is said that a component is "connected" or "linked" to another component, it should be understood that the former component may be directly connected or linked to the latter component or a third component may be interposed between the two components. Specific terms used in the present application are used simply to describe specific embodiments without limiting the disclosure. An expression used in the singular encompasses the expression of the plural, unless it has a clearly different meaning in the context.

One embodiment of the present disclosure will now be described in detail with reference to the accompanying drawings.

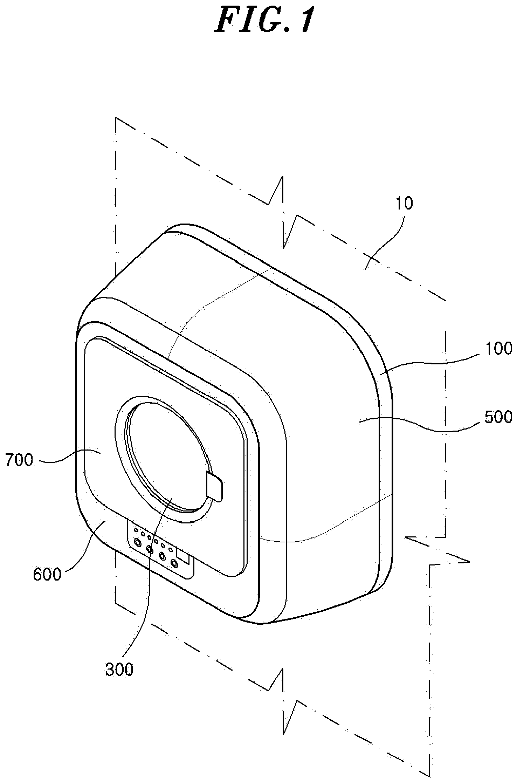

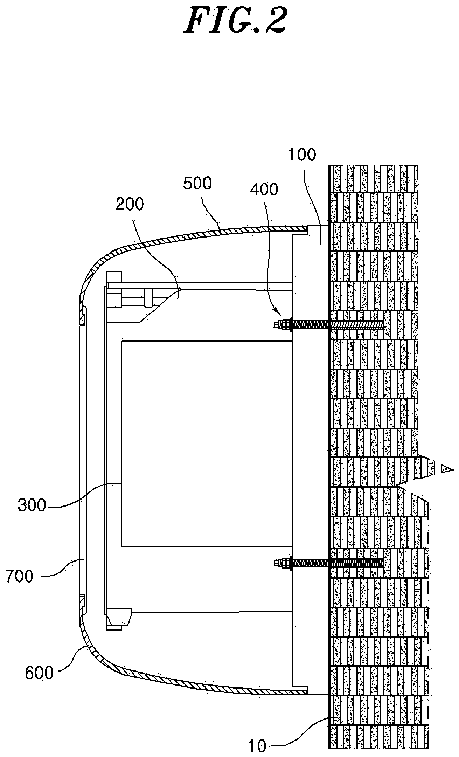

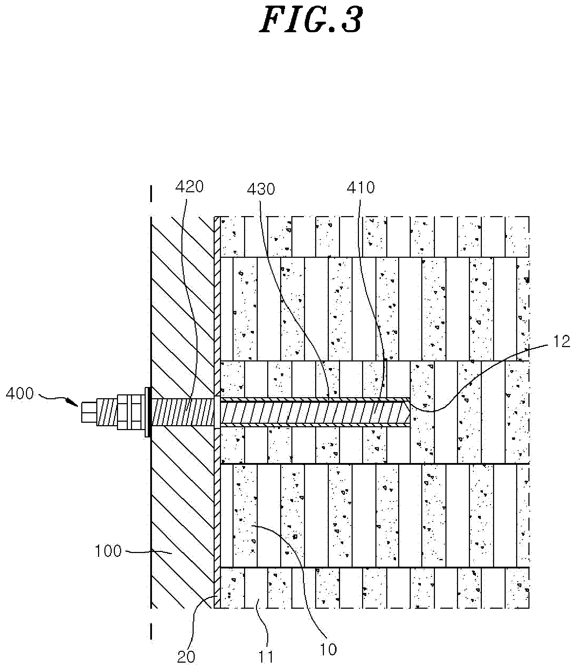

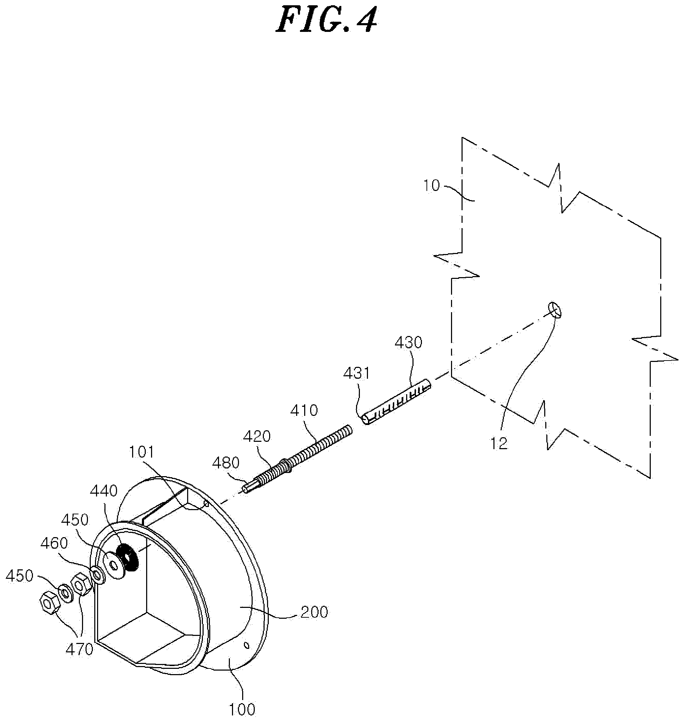

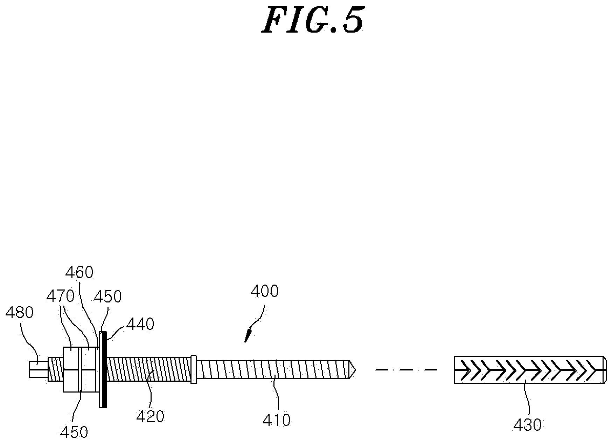

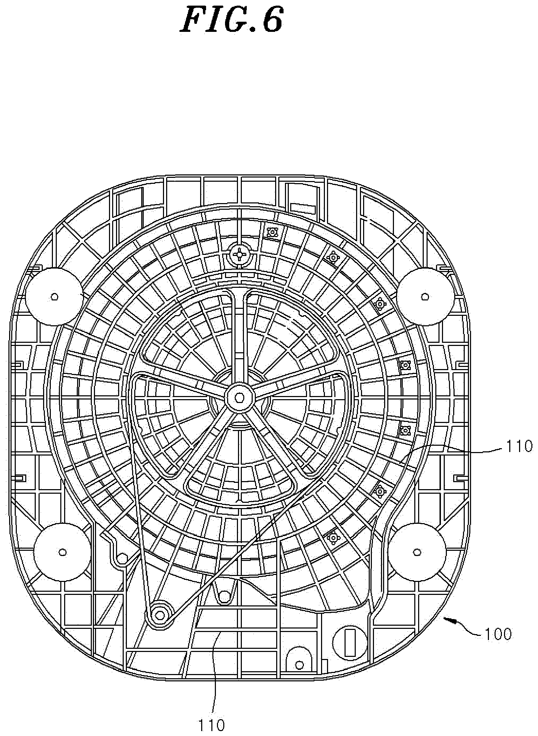

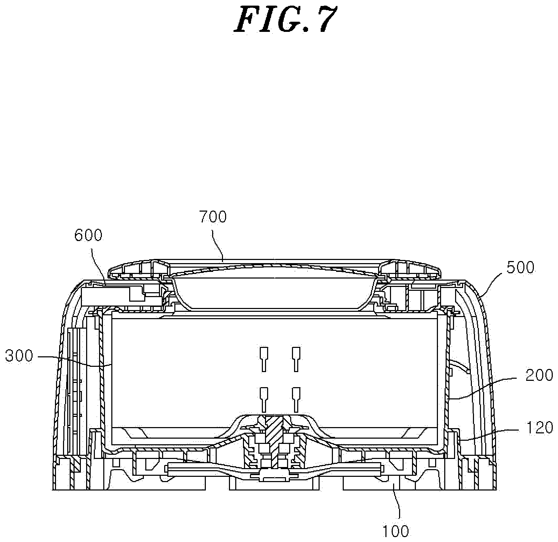

Fig. 1 is a perspective view showing a wall-mounted washing machine according to one embodiment of the present disclosure. Fig. 2 is a cross sectional view showing a state in which the wall-mounted washing machine according to one embodiment of the present disclosure is installed on a porous wall. Fig. 3 is an enlarged cross sectional view showing a fastening region between the wall-mounted washing machine according to one embodiment of the present disclosure and the porous wall. Fig. 4 is an exploded perspective view showing a fastener unit for fastening the wall-mounted washing machine installed on the porous wall. Fig. 5 is a side view showing the fastener unit for fastening the wall-mounted washing machine according to one embodiment of the present disclosure. Fig. 6 is a rear view showing the rear surface of the wall-mounted washing machine according to one embodiment of the present disclosure. Fig. 7 is a cross sectional view showing a reinforcing unit of the wall-mounted washing machine according to one embodiment of the present disclosure.

Referring to Figs. 1 to 7, the wall-mounted washing machine according to one embodiment of the present disclosure may generally include a rear panel 100, a tub 200, a drum 300 and a fastener unit 400. The wall-mounted washing machine may further include a housing 500, a front cover 600 and a front door 700.

The wall-mounted washing machine may be firmly installed on a porous wall 10 having a plurality of cavities 11. Specifically, the rear panel 100 can be fixedly installed on the porous wall 10 through the use of the fastener unit 400. The rear panel 100 may have the shape of a rectangular frame having round corners. However, if necessary, the shape of the rear panel 100 may be changed to different shapes such as a circular shape, an elliptical shape and the like.

The tub 200 may be integrally formed with the rear panel 100 and may accommodate washing water. Specifically, as shown in Fig. 4, the sidewall of the tub 200 is integrally formed with the rear panel 100. The diameter of the rear panel 100 may be set larger than the diameter of the circumference of the sidewall of the tub 200. Since the tub 200 is integrally formed with the rear panel 100, it is not necessary to use additional components such as a damper, a shock-absorbing spring and the like for supporting the tub 200. It is therefore possible to reduce the number of required components. This makes it possible to reduce the overall size of the wall-mounted washing machine so that it advantageously can be made small.

In particular, if the rear panel 100 and the tub 200 are made of the same material, for example, a synthetic resin, it is possible to simultaneously manufacture the rear panel 100 and the tub 200 through a single insert injection molding process. It is therefore possible to reduce the time and cost required for manufacturing the rear panel 100 and the tub 200.

Washing water may be contained in the tub 200. As shown in Fig. 4, the tub 200 is formed in a cylindrical shape so that the diameter of the sidewall thereof gradually increases toward the front side. Thus, the tub 200 can store washing water. The tub 200 may receive washing water from a water supply device. The washing water may be drained to the outside through a water drain device.

The water supply device may include a water supply pipe configured to provide a water supply flow path through which the washing water is supplied, and a water supply valve configured to control the flow rate of the washing water supplied into the tub 200 through the water supply pipe. The water drain device may include a water drain pump configured to provide discharge pressure to the washing water, a water drain pipe configured to provide a water drain flow path through which washing water is drained, and a water drain port through which washing water is drained from the water drain pipe.

The drum 300 is rotatably installed inside the tub 200 and may wash washing items, e.g., laundry. The drum 300 is a cylindrical water tank which accommodates washing items. The drum 300 may receive drive power from a drive device and may make a half rotation or one rotation inside the tub 200. The drive device may include a drive motor and a drive shaft rotatably mounted to the drive motor to transmit power from the drive motor to the drum 300.

Washing items are accommodated and washed within the drum 300. Thus, the vibration generated by the rotation of the drum 300 may be attenuated by the fastening force of the fastener unit 400 that fastens the rear panel 100 to a wall surface. However, the vibration generated in the course of dewatering and rinsing the washing items is not substantially attenuated only by the fastening force of the fastener unit 400. Thus, a shock-absorbing member 20 for absorbing the noise and vibration generated in the wall-mounted washing machine may be provided between the rear panel 100 and the porous wall 10. The shock-absorbing member 20 may be made of a material having superior elastic deformability, such as rubber or sponge, etc., in order to easily absorb vibration.

The housing 500 may be coupled to the rear panel 100 to surround the tub 200. The housing 500 have a diameter larger than the diameter of the tub 200. The housing 500 may be formed in a substantially cylindrical shape with the front and rear surfaces thereof opened. The rear end portion of the housing 500 may be removably fixed to the rear panel 100 by fixing members such as screws or hooks.

The front cover 600 may have a substantially circular panel shape and may be mounted to the open front portion of the housing 500. In the lower portion of the front cover 600, there may be provided operation buttons for operating the wall-mounted washing machine, a display window, and the like. An opening portion may be formed in the central region of the front cover 600. The front door 700 allows for opening or closing of the internal space of the tub 200 and may be mounted to the opening portion.

In order to stably and firmly fix the wall-mounted washing machine according to the present embodiment to the porous wall 10 (e.g., a wall formed of a plurality of porous blocks), a fastening hole 12 may be formed in the porous wall 10. The fastening hole 12 may be formed in the porous wall 10 at such a depth as to extend through two or more cavities 11. The fastening hole 12 may be formed in the porous wall 10 at a predetermined length (depth) through the use of a drill.

In this case, the length (depth) of the fastening hole 12 may vary depending on the strength, material and shape of the porous wall 10. For example, if the porous wall 10 is structurally weak, the length (depth) of the fastening hole 12 may be set longer in order to sufficiently secure a fastening area between the porous wall 10 and the fastener unit 400.

Referring to Fig. 5, the fastener unit 400 may be fixed to the fastening hole 12 at one end and may penetrate the rear panel 100 at the other end in order to fix the rear panel 100. That is to say, the fastener unit 400 may have one end portion and the other end portion in a macroscopic viewpoint. A first thread 410 may be formed in one end portion of the fastener unit 400 and a second thread 420 may be formed in the other end portion of the fastener unit 400. The first thread 410 and the second thread 420 have different pitches (e.g., the distance between ridges of the thread). The second thread 420 may have a smaller pitch than the first thread 410.

The reason for setting the pitch of the first thread 410 larger than the pitch of the second thread 420 is as follows. In the case of the porous wall 10, the material thereof is not dense but is weak due to the formation of a plurality of cavities 11. Thus, if the first thread 410 to be installed in the porous wall 10 has a small pitch and a dense shape, there is a possibility that the porous wall 10 may break. Accordingly, the first thread 410 may be formed to have a larger pitch than the second thread 420. The second thread 420, to which the rear panel 100 and various kinds of washers and nuts are fastened, may be formed to have a relatively small pitch.

The fastener unit 400 may further include an anchor part 430 inserted into the fastening hole 12 of the porous wall 10.

The anchor part 430 may have an internal thread 431 formed on the inner circumferential surface thereof so that the first thread 410 can be coupled to the internal thread 431. If the first thread 410 is inserted into the anchor part 430 in a state in which the anchor part 430 is fitted to the fastening hole 12, the diameter of the anchor part 430 may be expanded by the first thread 410. As the anchor part 430 is expanded, the fastener unit 400 can be reliably fixed in the fastening hole 12.

After the first thread 410 formed in one end portion of the fastener unit 400 is fixedly installed in the fastening hole 12 of the porous wall 10 through the anchor part 430, only the other end portion of the fastener unit 400 having the second thread 420 is exposed to the outside of the porous wall 10. In order to fix the wall-mounted washing machine to the other end portion of the fastener unit 400, the through-hole 101 of the rear panel 100 may be fitted to the second thread 420.

The fastener unit 400 may further include a vibration-absorbing member 440 configured to absorb the vibration of the rear panel 100. The vibration-absorbing member 440 may be installed around the second thread 420 and may be pressed against the rear panel 100 to absorb the vibration of the drum type washing machine transmitted via the rear panel 100.

The fastener unit 400 may further include a plurality of fastening nuts 470 fastened to the second thread 420 in order to press and fix the rear panel 100 to the porous wall 10. As the fastening nuts 470 are fitted to the second thread 420 and rotated around the second thread 420, the fastening nuts 470 are moved along the longitudinal direction of the second thread 420. At this time, the fastening nuts 470 can press the vibration-absorbing member 440 and the rear panel 100 against the porous wall 10.

The fastener unit 400 may further include a plain washer 450 and a spring washer 460. The plain washer 450 is disposed between the vibration-absorbing member 440 and the fastening nuts 470, thereby preventing any loosening of the fastening nuts 470 and also preventing any partial deformation of the vibration-absorbing member 440. The spring washer 460 is disposed between the plain washer 450 and the fastening nuts 470 to provide an elastic biasing force. Thus, the spring washer 460 can elastically press the vibration-absorbing member 440 and the rear panel 100 toward the porous wall 10. If necessary, the plain washer 450 may be additionally disposed between the fastening nuts 470.

A polygonal shaped head portion 480 may be formed at the tip of the other end portion of the fastener unit 400. The head portion 480 may have a triangular shape, a quadrangular shape, a hexagonal shape or an octagonal shape, for example. The head portion 480 is formed to engage with a wrench for applying an increased torque to the fastener unit 400 when installing the fastener unit 400 in the porous wall 10. In general, an anchor bolt installed in a wall has a minus sign groove or a plus sign groove in order to engage with a screw driver. Since such a groove is worn with ease, it is impossible to apply a large torque to the anchor bolt.

In the present embodiment, in order to apply a large torque, the head portion 480 (having a polygonal shape) is provided so that a tool, such as a socket wrench or the like, can be brought into engagement with the head portion 480. The vibration-absorbing member 440, the plain washer 450, the spring washer 460 and the fastening nuts 470 disposed at the tip of the other end portion of the fastener unit 400 may be accommodated within the rear panel 100 or exposed on the outer surface of the rear panel 100. As shown in Figs. 2 and 3, if the vibration-absorbing member 440, the plain washer 450, the spring washer 460 and the fastening nuts 470 are exposed on the rear panel 100, it is possible to facilitate attaching and detaching of the fastener unit 400 and thereby shorten the time required for installation or removal. Furthermore, embodiments of the disclosure are advantageous in that the vibration-absorbing member 440, the plain washer 450, the spring washer 460 and the fastening nuts 470, can be used together even with different sizes.

Referring to Fig. 6, the rear panel 100 may include one or more reinforcing ribs 110 formed on the rear surface of the rear panel 100 to enhance the strength of the rear panel 100. The reinforcing ribs 110 may be formed to radially extend from the center of the rear panel 100 and may be formed to extend in the horizontal direction and the vertical direction of the rear panel 100, thereby enhancing the overall strength of the rear panel 100.

Referring to Fig. 7, the wall-mounted washing machine according to the present embodiment may further include a reinforcing unit 120 configured to connect the rear panel 100 and the sidewall of the tub 200.

In order to distribute loads applied to the connection portion between the rear panel 100 and the tub 200, the reinforcing unit 120 may be connected to the tub 200 to protrude from the front surface of the rear panel 100 toward the front side of the sidewall of the tub 200. The connection portion located between the rear panel 100 and the tub 200 is reinforced by the reinforcing unit 120. Thus, it is possible to prevent the tub 200 from being deformed or broken.

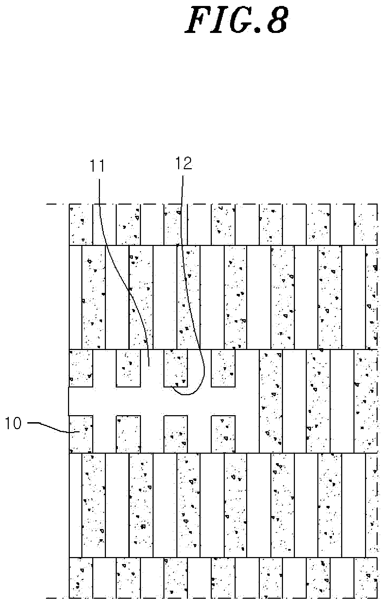

Hereinafter, an installation method of a wall-mounted washing machine according to another embodiment of the present disclosure will be described with reference to Figs. 8 to 12.

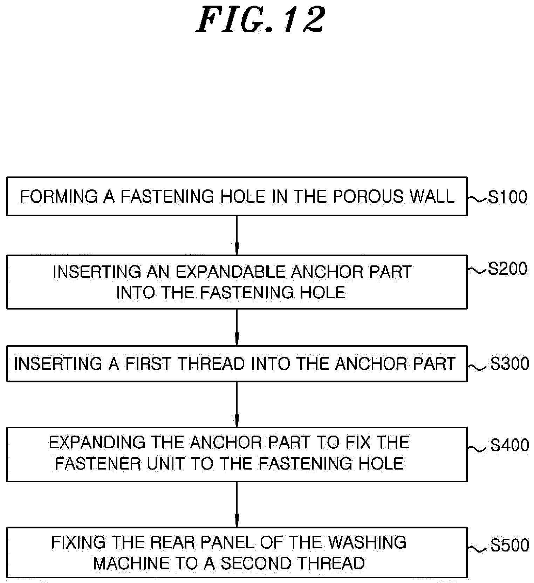

Referring first to Figs. 8 and 12, it may be possible to perform a step of forming the fastening hole 12 in the porous wall 10 having a plurality of cavities 11 (S100). At this time, the fastening hole 12 may be formed in the porous wall 10 at a predetermined length (depth) through the use of a drill. In this case, the fastening hole 12 may be formed in the porous wall 10 at a depth to penetrate at least two cavities 11.

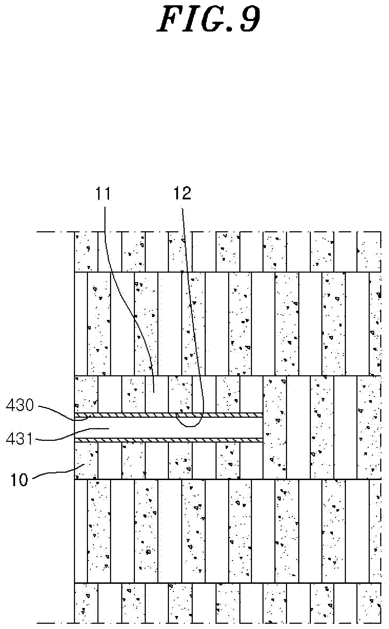

As shown in Fig. 9, after the fastening hole 12 is formed in the porous wall 10, the anchor part 430 (whose diameter can be expanded) can be inserted into the fastening hole 12 (S200). The anchor part 430 may have internal thread 431 formed on an inner circumferential surface thereof so that the first thread 410 of the fastener unit 400 can be coupled to the internal thread 431. The anchor part 430 may be made of plastic, for example.

The anchor part 430 is partially cut along the longitudinal direction thereof. Thus, if the first thread 410 is inserted into the anchor part 430 fitted to the fastening hole 12, the diameter of the anchor part 430 can be expanded by the first thread 410. As the diameter of the anchor part 430 is expanded, the anchor part 430 becomes strongly pressed against the porous wall 10 around the fastening hole 12 and will become fixed to the porous wall 10 around the fastening hole 12.

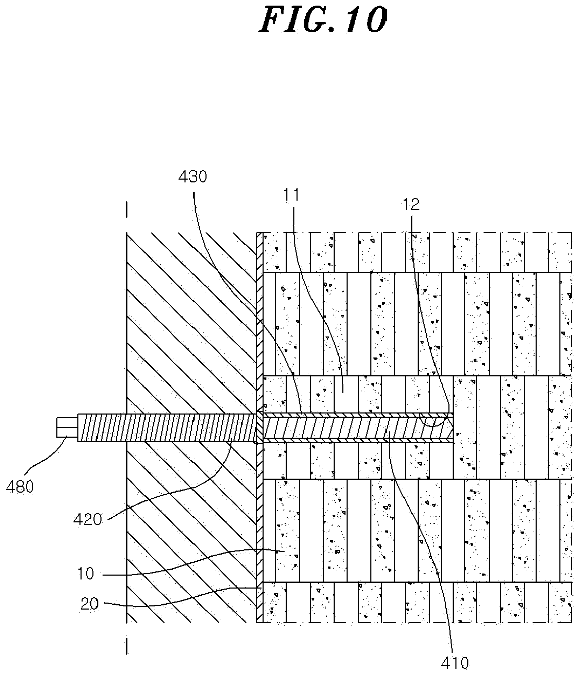

As shown in Fig. 10, the first thread 410 of the fastener unit 400 is inserted into the anchor part 430 fitted to the fastening hole 12 (S300). Then, it may be possible to perform a step of expanding the diameter of the anchor part 430 to fix the fastener unit 400 to the porous wall 10 around the fastening hole 12 (S400).

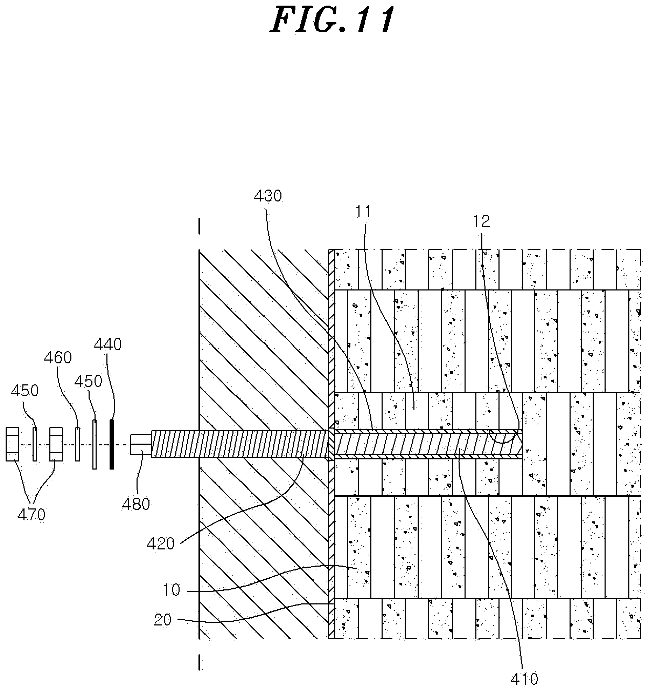

Furthermore, as shown in Fig. 11, after the fastener unit 400 is fixed to the fastening hole 12, it may be possible to perform a step of fixing the rear panel 100 of the drum type washing machine to the second thread 420 of the fastener unit 400 (S500).

In this regard, the step of fixing the rear panel 100 to the second thread 420 of the fastener unit 400 may include a step of fitting the rear panel 100 to the second thread 420, fitting the vibration-absorbing member 440 to the second thread 420 to absorb the vibration of the rear panel 100 and sequentially fitting the plain washer 450 and the spring washer 460 to the second thread 420. Furthermore, in order to press the vibration-absorbing member 440 and the rear panel 100 against the porous wall 10 so that the rear panel 100 is kept stationary and the vibration of the rear panel 100 is absorbed by the vibration-absorbing member 440, the fastening nuts 470 can be fastened to the portion of the second thread 420 on the outer side of the spring washer 460, thereby fixing the rear panel 100 to the fastener unit 400.

Although exemplary embodiments of the present disclosure are described above with reference to the accompanying drawings, those skilled in the art will understand that the present disclosure may be implemented in various ways without changing the necessary features or the spirit of the present disclosure.

Therefore, it should be understood that the exemplary embodiments described above are not limiting, but only an example in all respects. The scope of the present disclosure is expressed by claims below, not the detailed description, and it should be construed that all changes and modifications achieved from the meanings and scope of claims and equivalent concepts are included in the scope of the present disclosure.

From the foregoing, it will be appreciated that various embodiments of the present disclosure have been described herein for purposes of illustration, and that various modifications may be made without departing from the scope and spirit of the present disclosure. The exemplary embodiments disclosed in the specification of the present disclosure do not limit the present disclosure. The scope of the present disclosure will be interpreted by the claims below, and it will be construed that all techniques within the scope equivalent thereto belong to the scope of the present disclosure.

## Claims

1. A wall-mounted washing machine, comprising:
a rear panel operable to be mounted on a wall having a plurality of cavities;
a tub connected to the rear panel and configured to store washing water therein;
a drum rotatably installed in the tub and configured to wash items; and
a fastener unit comprising: one end portion operable to be fixed to a fastening hole extending through the cavities of the wall; and the other end portion configured to extend through the rear panel to fix the rear panel,
wherein a first thread is formed in the one end portion of the fastener unit, and wherein a second thread, having a smaller pitch than the first thread, is formed in the other end portion of the fastener unit.

2. The washing machine of claim 1, wherein the fastener unit further comprises an anchor part operable to be fitted to the fastening hole and configured to be expanded and fixed to the wall surrounding the fastening hole as the first thread is inserted into the anchor part.

3. The washing machine of claim 1, wherein the fastener unit further comprises a vibration-absorbing member fitted to the second thread and pressed against the rear panel and operable to absorb vibration of the rear panel.

4. The washing machine of claim 3, wherein the fastener unit further comprises a plurality of fastening nuts operable to be fastened to the second thread and operable to press the vibration-absorbing member and the rear panel against the wall.

5. The washing machine of claim 4, wherein the fastener unit further comprises:
a plain washer disposed between the vibration-absorbing member and the plurality of fastening nuts, wherein the plain washers are operable to prevent loosening of the plurality of fastening nuts; and
a spring washer disposed between the plain washer and the fastening nut, and wherein the spring washer is operable to elastically push the vibration-absorbing member and the rear panel toward the wall.

6. The washing machine of claim 1, wherein a polygonal shaped head portion is formed at a tip of the other end portion of the fastener unit and wherein the head portion is operable to receive torque from a wrench.

7. The washing machine of claim 1, wherein the rear panel and a sidewall of the tub are integrally formed with each other, and wherein the rear panel has a diameter larger than a diameter of a circumference of the sidewall of the tub.

8. The washing machine of claim 1, wherein the rear panel and the tub are integrally formed with each other using an insert injection molding process.

9. The washing machine of claim 1, wherein the tub has a sidewall formed in a cylindrical shape wherein a diameter of the sidewall gradually increases toward a front side thereof.

10. The washing machine of claim 1, wherein the rear panel comprises one or more reinforcing ribs formed on a rear surface of the rear panel and operable to enhance strength of the rear panel.

11. The washing machine of claim 1, further comprising a shock absorbing member operable for absorbing noise and vibration and installed between the rear panel and the wall.

12. The washing machine of claim 1, wherein the wall is porous and further comprising:
a reinforcing unit configured to connect the rear panel and a sidewall of the tub.

13. The washing machine of claim 12, wherein the reinforcing unit protrudes from a front surface of the rear panel toward a front side of the sidewall of the tub and is operable to distribute loads applied to a connection portion disposed between the rear panel and the tub.

14. An installation method of a wall-mounted washing machine, the method comprising:
forming a fastening hole in a wall having a plurality of cavities;
inserting an expandable anchor part into the fastening hole;
inserting a first thread of a fastener unit into the anchor part to expand the anchor part to fix the fastener unit to the fastening hole; and
fixing a rear panel of the washing machine to a second thread of the fastener unit.

15. The method of claim 14, wherein the fixing the rear panel comprises:
fitting the rear panel to the second thread;
sequentially fitting a vibration-absorbing member, a plain washer and a spring washer to the second thread; and
pressing the vibration-absorbing member and the rear panel against the porous wall by fastening a plurality of fastening nuts to a portion of the second thread on an outer side of the spring washer.
